(19) Europäisches Patentamt
European Patent Office
Office européen des brevets

(11) Veröffentlichungsnummer: **0 201 892**
**B1**

# (12) EUROPÄISCHE PATENTSCHRIFT

(45) Veröffentlichungstag der Patentschrift: **08.03.89**

(51) Int. Cl.⁴: **C 09 B 27/00** // D06P3/28

(21) Anmeldenummer: **86106400.4**

(22) Anmeldetag: **12.05.86**

(54) **Verfahren zur Herstellung von Azoverbindungen.**

(30) Priorität: **14.05.85 DE 3517273**

(43) Veröffentlichungstag der Anmeldung:
**20.11.86 Patentblatt 86/47**

(45) Bekanntmachung des Hinweises auf die Patenterteilung:
**08.03.89 Patentblatt 89/10**

(84) Benannte Vertragsstaaten:
**CH DE FR GB LI**

(56) Entgegenhaltungen:
**DD-A-100 965**
**GB-A-457 718**
**GB-A-810 736**
**GB-A-1 104 391**

**JUSTUS LIEBIGS ANNALEN DER CHEMIE, Band 754, 1971, Weinheim (BRD). S. HÜNIG et al.: "Derivate der 3-Methyl-1.2-benzisothiazolon-(2)-, 1.3-Benzdithiolon-(2)-und 1.2-Benzdithiolon-(3)-hydrazone", Seiten 46-55**

(73) Patentinhaber: **BAYER AG, Konzernverwaltung RP Patentabteilung, D-5090 Leverkusen 1 Bayerwerk (DE)**

(72) Erfinder: **Gerlach, Rainer, Dr., Bamberger Strasse 16, D-5090 Leverkusen 1 (DE)**

EP 0 201 892 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Gegenstand der Erfindung ist ein Verfahren zur Herstellung von Azoverbindungen durch oxidative Kupplung von aromatischen oder heteroaromatischen Hydrazinen bzw. Hydraziniumverbindungen mit aromatischen Aminen, Phenolen oder CH-aciden Verbindungen.

Die oxidative Kupplung ist allgemein bekannt (vgl. Houben-Weyl, Methoden der organischen Chemie X/3, S. 360 ff).

Die Methode zur Herstellung von Azoverbindungen ist besonders häufig am Beispiel von quartären Hydraziniumverbindungen beschrieben worden (vgl. Angew. Chem. 70, 215 (1958), 74, 818 (1962) und 80, 343 (1968).

Demgegenüber ist bislang wenig über die oxidative Kupplung mit nicht-quarternierten, also neutralen Hydrazinen berichtet worden (vgl. Chemistry Letters 1733 - 1736 (1981); DD-A-100 965 und J. prakt. Chem. 312 (1970), 533 - 541, sowie Liebigs Ann. Chem. 754, 46 (1971).

Aus GB-A-810 736 ist ein Verfahren zur Herstellung von Azofarbstoffen durch Umsetzung von Mischungen aus Kupplungskomponenten und heterocyclischen Hydrazonen mit Oxidationsmitteln, wie z. B. Eisen-, Kupfer-, Quecksilber- und Cersalzen sowie Hypochloriden, Bleidioxid, Persulfaten, Perboraten, $H_2O_2$ und (Luft)-Sauerstoff, bekannt, das bevorzugt in Gegenwart von Oxidationskatalysatoren. wie z. B. Eisen-II-Salzen durchgeführt wird.

Der Nachteil der bisher bekannten Verfahren liegt vor allem darin, daß sie zumeist nur bei sehr speziellen Systemen funktionieren und auch dann häufig nur unbefriedigende Ausbeuten liefern.

Man ist auch der Auffassung gewesen, daß sich neutrale Hydrazinverbindungen zersetzen bevor eine oxidative Kupplung eintritt (F. Korte, Methodicum Chimicum, Bd. 6, 87 ff (1974) G. Thieme, Academic Press, Stuttgart). Deshalb wird die oxidative Kupplung als ein Verfahren ohne technische Bedeutung beschrieben (K. Hunger: Azobenzol und Derivate Bd. 8, Kap: 2.4. in Ullmann: Encyclopädie der technischen Chemie, 4. Auflage, 1974).

Der vorliegenden Erfindung liegt daher die Aufgabe zugrunde, ein allgemein gültiges Verfahren zur oxidativen Kupplung zu entwickeln, welches auch im technischen Maßstab realisierbar ist.

Es wurde nun überraschenderweise gefunden, daß das Prinzip der oxidativen Kupplung zur Herstellung von Azofarbstoffen wesentlich universeller erfolgreich angewendet werden kann, wenn man die Oxidation in Gegenwart von Redoxvermittlern ("Mediatoren") (H. Wendt: "Organische Elektrochemie", Chemie in unserer Zeit, 19 (5), 1985, 145 - 154) mit einem Standardpotential von 0,2 - 1,5 Volt und gegebenenfalls eines zusätzlichen Oxidationsmittels mit einem Standardpotential von 0,25 - 2,5 Volt durchführt, wobei die Summe der Oxidationsäquivalente mindestens 4 betragen soll und die Redoxvermittler Elemente enthalten, die stabile und isolierbare Verbindungen in mindestens 3 verschiedenen Oxidationszahlen bilden und in mindestens 4 Redoxpaaren mit jeweils unterschiedlichen Standardpotentialen wirken können.

Geeignete "Redoxvermittler" sind elementares Jod und Verbindungen aus denen sich Jod thermisch, reduktiv oder oxidativ freisetzen läßt.

Bevorzugt sind NaJ, KJ, $NaJO_3$ und $KJO_3$; ganz besonders vorteilhaft ist elementares Jod.

Im allgemeinen werden 0,1 - 50 Mol-% (elementares) Jod pro Mol Hydrazinverbindungen eingesetzt. Vorzugsweise werden 2 - 10 Mol-% verwendet.

Grundsätzlich soll sich der Begriff Redoxvermittler (Mediator) auf anorganische und organische Stoffe beziehen. Bekannterweise werden organische Mediatoren aus Naturprodukten gewonnen oder chemisch durch Synthese hergestellt.

Der besonders in der Elektrochemie benutzte Ausdruck Mediator soll aber rein katalytisch wirkende Stoffe nicht ausschließen (vgl. J. Simonet: "Electrogenerated Reagents" in M. M. Baizer, ORGANIC ELECTROCHEMISTRY, 1983, New York).

Im übrigen wird die Reaktion unter den für oxidative Kupplungen üblichen Bedingungen, d.h. bei etwa -10 bis 130°C, vorzugsweise 10 - 80°C, in einem unter Reaktionsbedingungen indifferenten Lösungsmittel sowie in Gegenwart eines Oxidationsmittels durchgeführt. Die Reaktion kann aber auch elektrochemisch durchgeführt werden (indirekte Elektrolyse).

Als Oxidationsmittel kommen in Betracht: Wasserstoffperoxid, Alkalibromate, Alkalipersulfate, Alkalihypochloride, oxidierend-wirkende Schwermetallsalze (Hg-II, Cu-II, Pb-IV, Cer-IV), Alkaliperborate, Alkalipercarbonate, Alkalichlorite, Luft oder $K_3Fe(CN)_6$ (Alkali = Na/K).

Bevorzugte Redoxvermittler weisen ein Standardpotential von 0,4-1,3 Volt auf, z. B. 0,54; 0,59; 0,60; 0,99; 1,09; 1,19 und 1,21. (In der angelsächsischen Literatur sind diese Potentiale häufig mit einem negativen Vorzeichen versehen).

Die bei der Oxidation insgesamt einzukalkulierenden 4 Oxidationsäquivalente beziehen sich auf die theoretische Mindestmenge. In der Praxis wird man sicherheitshalber mit einem gewissen (d. h. etwa 5 bis 10 %-igen) Überschuß an Oxidationsäquivalenten arbeiten.

Als Lösungs- bzw. Verdünnungsmittel kommen vorzugsweise in Frage:

Wasser, protische organische Lösungsmittel, wie Alkohole und Fettsäuren.

Beispielhaft seien genannt:

Ethanol, Isopropanol, n-Butanol, 2-Ethylhexanol, Diethylenglykol, Butandiole, Essigsäure, Propionsäure, Ethylhexansäure u.a. - dazu Wasser in Mengen von 0,1 - 10-Gew.-Teilen.

In besonderen Fällen sind auch aprotisch mit Wasser mischbare Lösungsmittel (DMF, Sulfolan, Dioxan,

Acetonitril u. a.) geeignet.

Vorteilhaft sind auch bisweilen 2-Phasensysteme, gegebenenfalls in Gegenwart von Emulgatoren, Dispergiermitteln, Phasentransferkatalysatoren u. a. Hilfsmitteln.

Das Verfahren kann diskontinuierlich oder kontinuierlich (z. B. mit Dosiergeräten) durchgeführt werden, wobei die Reaktionspartner getrennt oder teilweise schon vorgemischt mit oder ohne Lösungsmittel eingetragen werden können.

Bei der praktischen Durchführung des Verfahrens verfährt man vorteilhafterweise so, daß man zu dem in einem geeigneten Lösungsmittel vorgelegten Jodkatalysator die übrigen Reaktionspartner hinzufügt.

Geeignete aromatische oder heteroaromatische Hydrazinverbindungen sind stark elektronegativsubstituierte aromatische Hydrazine (z. B. 2,4-Dinitro-6- brom-hydrazin, 2-Nitro-4-cyan-hydrazin, 2,4-Dinitrophenylhydrazin, 2-Chlor-4-nitro-phenylhydrazin, 2-Chlor- 4,6-dinitrophenylhydrazin) sowie Hydrazine des 2-Thiophens, Thiazols und vor allem des 2-Benzthiazolyls, 2-Benzoxazols und 2-Benzimidazols, entsprechend der Formel

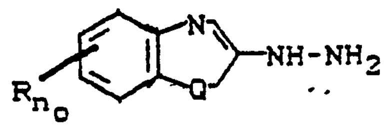

worin

Q = S, O, -NR',
R' = H, Alkyl, Aryl
$n_o$ = 1 - 4,
R = H, F, Cl, Br, CN, $NO_2$, Alkyl, Aryl, COO-, Alkyl-S-, Alkyl-$SO_2$-, NH-Acyl (z. B. $NHCOCH_3$), O-Alkyl, SCN, bedeutet,

und die Substitution einzeln oder mehrfach oder auch untereinander beliebig kombiniert vorliegen kann.

Die bevorzugten Hydrazinderivate sind vor allem in 6- und/oder in 4-Stellung des Benzolteils substituiert.

Die Hydrazine werden vorwiegend in freier Form, d. h. ohne Schutzgruppe, eingesetzt.

Verbindungen mit Schutzgruppen (z. B. -$SO_2$-Aryl, -HC=O oder -CO-Aryl/-Alkyl) können ohne weiteres direkt eingesetzt werden, wobei sich allerdings die Reaktionsdauer und Ausbeute verändern können.

Weitere geeignete Hydrazinverbindungen (ggf. substituierte) 2-Hydrazino-thiazole, z. B. 2-Hydrazino-4-phenylthiazol, 2-Phenylsulfonylhydrazido-5-nitro-thiazol, (ggf. substituierte) 3-Hydrazino-2,1-benzisothiazole, z. B. 3-Hydrazino-5-nitro-2,1-benzisothiazol,

(ggf. substituierte) 2-Hydrazino-thiadiazole z. B. 5-Hydrazino-3-phenyl-1,2,4-thiadiazol, 2-Hydrazino-5-ethylmercapto-1,3,4-thiadiazol,

(ggf. substituierte) 2-Hydrazino-benzoxazole, z. B. 2-Hydrazino-5-nitro-benzoxazol, 2-Hydrazino-6-nitro-benzoxazol,

weiter 2-Hydrazino-3,5-dinitrothiophen, (ggf. substituierte) 2- und 4-Hydrazino-pyridine z. B. 4-Hydrazino-3,5-dibrompyridin, 4-Hydrazino-pyridin, 2-Hydrazino-5-nitro-pyridin, 2-Hydrazino-3,5-dinitro-pyridin, 2-Chlor-3-cyano-6-hydrazino-4-methyl-pyridin, 3-Cyano-2,5-dichloro-6-hydrazino-4-methyl-pyridin;

(ggf. substituierte) Chinolinyl- und Isochinolinylhydrazine; (ggf. substituierte) 3- und 4-Hydrazino-pyridazine, z. B. 3-Chlor-6-hydrazino-pyridazin, 3,6-Dichlor-5-hydrazino-pyridazin;

(ggf. substituierte) Hydrazino-chinoxaline, z. B. 2-Chlor-3-hydrazin-chinoxalin,

(ggf. substituierte) Hydrazino-phthalazine, -cinnoline, -chinazoline, -imidazole,

(ggf. substituierte) 2- und 4-Pyrimidyl-hydrazine, z. B. 2,5-Dichlor-6-hydrazino-4-methylpyrimidin, 4,5-Dichlor-6-hydrazino-2-methylpyrimidin, 2,4,5-Trichlor-6-hydrazino-pyrimidin, 2,5-Dichlor-4-methyl-6-hydrazino-pyrimidin, 2-Fluor-5-chlor-6-hydrazino-4-methyl-pyrimidin;

(ggf. substituierte) Hydrazino-triazine, z. B. 2-Hydrazino-4,6-dimethoxy-triazin, 2-Cyclohexylamino-4-hydrazino-6-methoxy-triazin, 2-Dibutylamino-4-hydrazino-6-methoxy-triazin, 2-Chlor-4-dibutylamino-6-hydrazino-triazin.

Bevorzugte Kupplungskomponenten sind vor allem solche der Anilinreihe, die folgender allgemeinen Formel entsprechen:

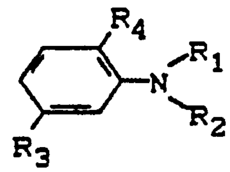

worin

| | |
|---|---|
| $R_1$ und $R_2$ | H oder gegebenfalls substituiertes Alkyl oder Aralkyl, |
| $R_3$ | H, gegebenenfalls substituiertes Alkyl oder Aralkyl, NH-Acyl, -O-Alkyl, -O-Aryl, $-(OCH_2OH_2)_m$-OH, -OCO-Alkyl, -OCO-O-Alkyl, -NR'-R" (R',R" = H, Alkyl; m = 1 - 100) oder NH-$SO_2$-Alkyl |
| $R_4$ | H, Alkyl, F, Cl, Br, O-Alkyl oder O-Aryl bedeuten. |

Es handelt sich hierbei vor allem um in der Chemie der Dispersionsfarbstoffe übliche Kupplungskomponenten, die in der einschlägigen Literatur ausführlich beschrieben sind.

Andere Kupplungskomponenten wie Phenole, Naphthole und ihre vorteilhaft durch Alkyl-Halogen-Amino-Carbonsäure- oder Sulfonsäuregruppen substituirten Derivate sind ebenfalls verwendbar.

Ebenfalls beispielhaft erwähnt seien CH-acide Verbindungen wie substituierte Acetessigester, Malonester oder substituierte Cyanessigester, Pyrazolone, vorzugsweise 1-Phenyl-3-methyl-pyrazolon-5 oder Pyridone, aromatische Amine, vorzugsweise N,N-dialkylierte m- Anisidine oder m-Toluidine, aliphatische und/oder aromatische Hydrazone, die vorteilhaft durch Hydroxy-, Carboxyl-, Sulfonyl- oder andere Gruppen substituiert sein können.

Im übrigen handelt es sich bei den oben in beliebigem Zusammenhang genannten Alkylresten vorzugsweise um solche mit 1 - 6 C-Atomen und bei den Arylresten um Phenylreste, die beide durch übliche Substituenten, wie z. B. Cl, Br, F, Alkyl, -CO-Alkyl, OCO-Alkyl, O-CO-O-Alkyl, -(Oxialkylen)$_n$-OH, -N $(Alkyl)_nX^-$, $-SO_3H$, -COOH oder CN substituiert sein können, wobei "Alkyl" $C_1$-$C_4$-Alkyl bedeutet.

Die als Ausgangssubstanzen benötigten Hydrazino-Verbindungen können durch Umsetzung der entsprechenden Halogen- (insbesondere Chlor), Alkoxy-, z. B. Methoxy-, Alkylsulfonyl-, z. B. Ethylsulfonyl-, Arylsulfonyl-Sulfonsäure- oder Amino-Derivate mit Hydrazinhydrat, substituierten Hydrazinen, Hydraziden oder Hydrazonen, nach literaturbekannten Verfahren (vgl. S. S. Joshi und O. S. Deorha, J. Ind. Chem. 28 (1951), 34; M. Tomita et al. J. Pharm. Soc. Japan 71 (1951), 850 - 854; Sehouten Recueille 56 (1937), 541 T. L. Morrill et al. Org. Prep. and Proc. Int. 7 (2), 67 - 70 (1975)) dargestellt werden.

Ganz vorteilhaft werden auch substituierte heterocyclische Halogenverbindungen z. B. chlorierte Triazine, Pyrimidine, Pyrazine, Pyridine oder Chinoxaline, die bisher z. B. als Reaktivgruppen in Azofarbstoffen verwendet wurden, der "Hydrazinolyse" unterworfen.

Neben den bereits oben erwähnten Vorteilen des erfindungsgemäßen Verfahrens sind folgende Vorzüge hervorzuheben:

1. Es ermöglicht die Herstellung auch solcher Farbstofftypen, die durch die ansonsten geläufige Diazotierungs- und Kupplungsreaktion nur schwer zugänglich sind.

2. Es ist leichter zu handhaben, da insbesondere im bevorzugten Temperaturbereich nicht für Kühlung oder Erwärmung gesorgt werden muß und die Reihenfolge der Zugabe der Reaktionsteilnehmer sehr vorteilhaft erfolgen kann.

3. Es ist umweltfreundlicher, da sich die verwendeten Lösungsmittel leicht wiedergewinnen lassen und gegenüber bisherigen oxidativen Kupplungen weniger oder keine Schwermetallsalze verwendet werden können.

4. Es ist ökonomischer, da gegenüber einer Diazotierungs- und Kupplungsreaktion nur geringe Säuremengen benutzt werden müssen und eine Neutralisierung im Aufarbeitungsverfahren wegfallen kann.

Das erfindungsgemäße Verfahren eignet sich nicht nur zur Herstellung wertvoller Azofarbstoffe, sondern auch für analytische photographische oder elektrophotographische Zwecke.

Eine besondere Verfahrensvariante ist so gestaltet, daß man den Farbstoff direkt auf der Faser erzeugt.

Dabei geht man beispielsweise so vor, daß man den zu färbenden Stoff durch Benetzen oder Tauchen mit einer Mischung bestehend aus einer aromatischen oder heteroaromatischen Hydrazinverbindung und einer CH-aciden Kupplungskomponente aus der Anilin- und/oder Phenolreihe tränkt, ihn gegebenenfalls trocknet, anschließend die Substratoberfläche durch Tauchen, Benetzen oder Besprühen mit einem Bad bestehend aus einem Mediator und durch eine anschließende Nachbehandlung mit einem Oxidationsmittel färbt.

Die Reihenfolge bzw. Badzusammensetzung kann bei der Durchführung dieser Färbevariante beliebig variiert werden: Beispielsweise kann man auch die Reihenfolge: Kupplungskomponente, Hydrazinverbindung, Mediator und Oxidationsmittel wählen.

Als weiteres Beispiel sei das Vorbehandeln der Substratoberfläche in einem Bad bestehend aus einem Oxidationsmittel, heteroaromatischer oder aromatischer Hydrazinverbindung und einer Kupplungskomponente und anschließend das Behandeln in einem mediatorhaltigen Medium erwähnt. Diese Färbeverfahren zeichnen sich dadurch aus, daß sie besonders umweltfreundlich sind.

**Beispiel 1**

Zu einer Mischung aus 160 g n-Butanol, 21 g Eisessig und 60 ml Wasser werden 1,5 g Jod gegeben. Mit ca. 4 g 85 %-iger Phosphorsäure wird ein pH-Wert von 1,3 - 1,5 eingestellt der im Verlaufe der Reaktion durch eventuelle weitere Säurezugaben gehalten werden muß; (auch teilweiser Ersatz durch Schwefelsäure ist möglich).

Zu dieser Jodlösung werden im Verlaufe von 4 - 5 Stunden 33,7 g N-Cyanethyl-N-acetoxy-ethylanilin als ca. 60 %-ige essigsaure Lösung zugetropft und 31,6 g 2-Hydrazino-6-nitrobenzthiazol als wäßrige Paste gegeben; und zwar in 10 Portionen (1 Port. je 20 - 30 Minuten). Man läßt ebenfalls im Verlaufe von 4 - 5 Stunden 31,5 g einer 33 %-igen wäßrigen Wasserstoffperoxidlösung zutropfen, wobei die Temperatur durch Wasserkühlung bei 20 - 25°C gehalten wird und für gute Durchmischung gesorgt wird. Man läßt 2 Stunden nachrühren und saugt die erhaltene Suspension ab. Der Preßkuchen wird mit 2 l warmen Wassers gewaschen, gut abgepreßt und bei 60 - 80°C im Vakuum getrocknet. Man erhält in etwa 95 %-iger Ausbeute 65 - 70 g des Farbstoffs der Formel

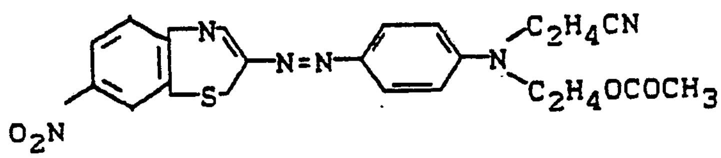

Das zuerst erhaltene Filtrat mit einem Volumen von ca. 300 ml wird am Rotationsverdampfer destilliert: Badtemperatur 20 - 80°C; Endvakuum: ca. 30 mbar; Etwa 70 - 80 % des verwendeten Lösungsmittels wird wiedergewonnen. Wird nach der gleichen Vorschrift, jedoch ohne die Verwendung von Jod gearbeitet, so erhält man nur ca. 3 % der Theorie Farbstoff.

**Beispiel 2**

24,6 g 2-Chlor-4,6-dinitrophenylhydrazin und 20,5 g N,N-Diethyl-3-acetamino-anilin werden portionsweise im Verlaufe von 4 Stunden in eine Lösung von 2,5 g Jod in 50 ml Eisessig/700 ml Wasser/350 ml n-Butanol, die mit halbkonzentrierter Natronlauge auf pH 4 eingestellt wurde, eingetragen. Gleichzeitig werden anteilmäßig 23 ml einer 33 %-igen Wasserstoffperoxidlösung hinzugefügt.

Man läßt noch 3 Stunden nachrühren und saugt den erhaltenen Farbstoff der Formel

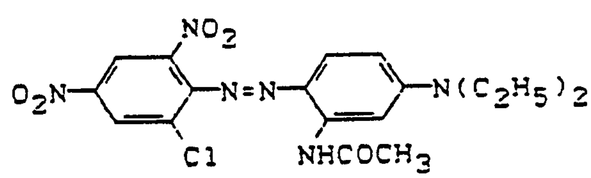

ab. Ausbeute: 42,5 g

**Beispiel 3**

Äquimolare Mengen von 2,4-Dinitrophenylhydrazin und N,N-Diethyl-2-methoxyethoxy-5-acetylamino-anilin werden analog Beispiel 2 (jedoch ohne Verwendung von Eisessig als Lösungsmittel) miteinander umgesetzt. Es wird ein pH-Wert von 6 mittels eines Phosphatpuffers eingestellt. Man erhält 45 g des Farbstoffs der Formel

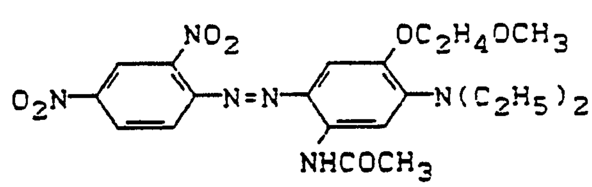

**Beispiel 4**

In Analogie zu Beispiel 2 wird unter Verwendung entsprechender Ausgangsmaterialien bei pH 6 der Farbstoff der Formel

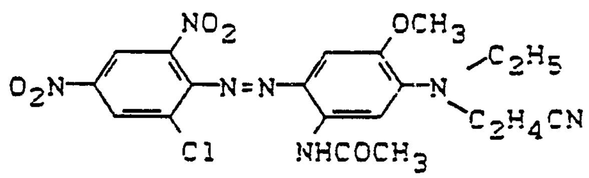

in etwa 90 %-iger Ausbeute hergestellt.

**Beispiel 5**

In Analogie zu Beispiel 2 wird unter Verwendung entsprechender Ausgangsmaterialien bei pH 3 der Farbstoff der Formel

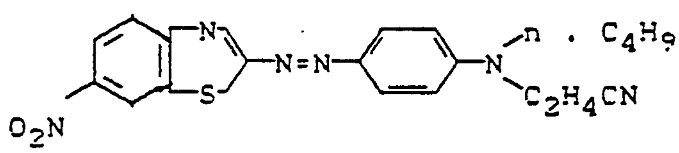

in etwa 90 %-iger Ausbeute hergestellt.

**Beispiel 6**

Unter gutem Rühren wird eine Pulvermischung aus

| | |
|---|---|
| 15,8 g | 2-Hydrazino-6-nitrobenzthiazol, |
| 17,5 g | N,N-Diethyl-2-methoxy-5-acetylaminoanilin und |
| 22,3 g | Natriumperborat über einen Zeitraum von 4 - 5 Stunden bei 20°C mittels eines Dosiergerätes kontinuierlich in eine Lösung aus |

200 ml n-Butanol, 50 ml Eisessig, 4 g Jod und 300 ml Wasser gegeben.
Zu Beginn der Reaktion wird mit 40 %-iger Natronlauge der pH-Wert auf 5,0 eingestellt. Die Mischung wird anschließend noch 5 - 6 Stunden gerührt. Man saugt das Produkt ab, trennt das Filtrat ab (die Hauptmenge der Lösungsmittel kann wie in Beispiel 1 beschrieben durch Destillation wiedergewonnen werden) und wäscht mit ca. 2 l 50°C warmen Wasser nach. Nach dem Trocknen werden 28,8 g Farbstoff der Formel

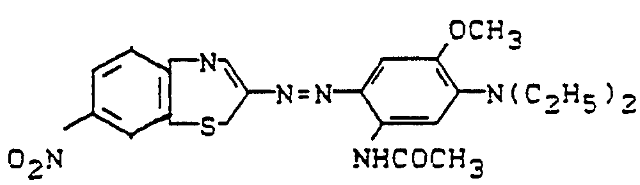

erhalten.

**Beispiel 7**

In einer Apparatur, die zur indirekten Elektrolyse geeignet ist, bestehend aus einem Potentiostaten und Platin- oder Carbon-Elektroden als Arbeitselektroden, einer Calomel- oder Ag/AgCl-Elektrode (Referenzelektrode) und einer Platin- oder Wolframelektrode als Gegenelektrode, wird die oxidative Kupplung bei einem Potential von (+) 0,6 - 0,9 Volt ausgeführt:

0,2 g Dinitrophenylhydrazin und
0,2 g N,N-Diethylacetmetamin, gelöst in
20 ml DMF werden innerhalb von 2 - 3 Stunden in eine Lösung aus
3 g Eisessig, 2 g Natriumacetat,
0,05 g Jod in 60 ml Dimethylformamid und
10 ml Wasser getropft.

Anschließend wird mit ca. 100 - 200 ml Wasser verdünnt, um den Farbstoff vollständig auszufällen. Absaugen und Trocknen ergibt ca. 0,4 g Farbstoff der Formel

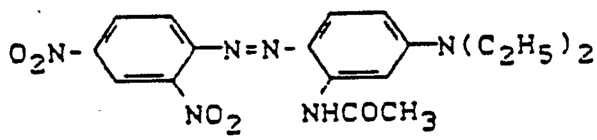

entsprechend ca. 50 % Ausbeute der Theorie.

Im folgenden werden tabellarisch weitere Beispiele von Farbstoffen aufgeführt, die nach dem erfindungsgemäßen Verfahren dargestellt werden können:

Nr. 8 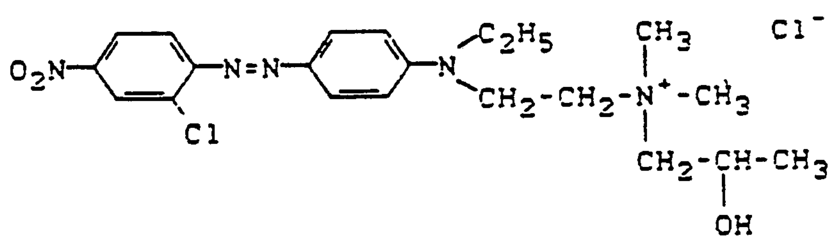

Nr. 9 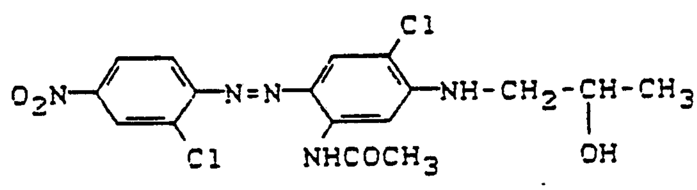

Nr. 10

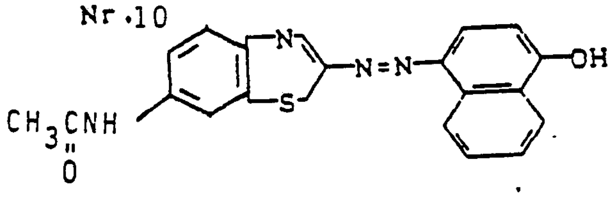

Nr. 11 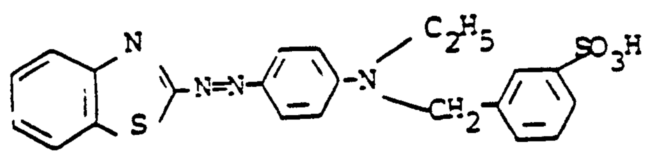

Nr. 12

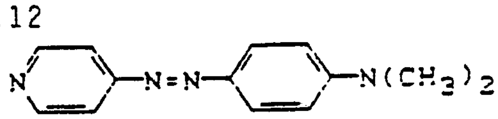

Nr. 13

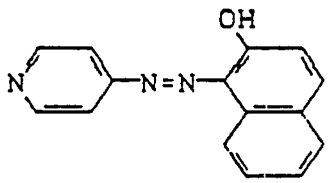

Nr. 14

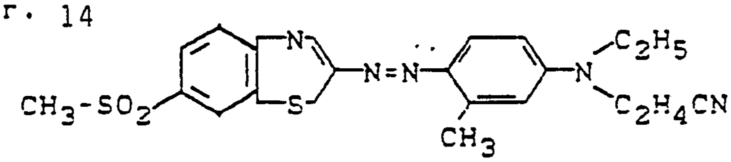

Nr. 15

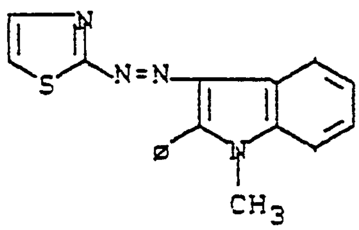

Nr. 16

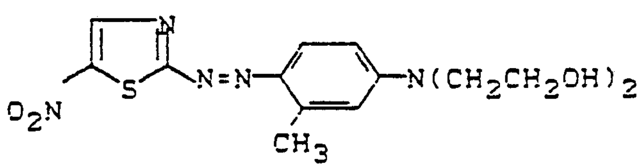

Nr. 17

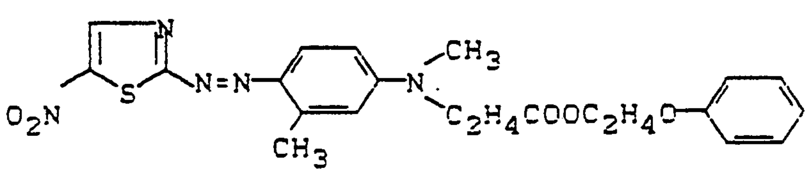

Nr. 18

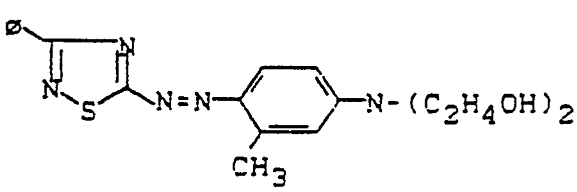

Nr. 19

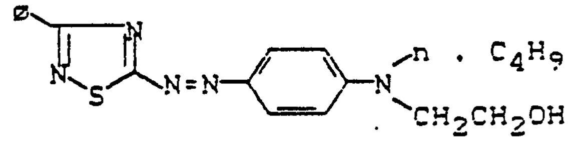

Nr. 20

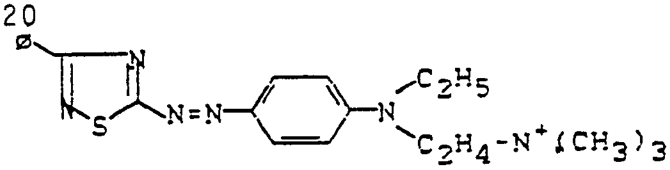

Nr. 21

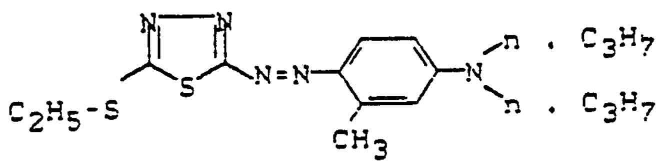

Nr. 22

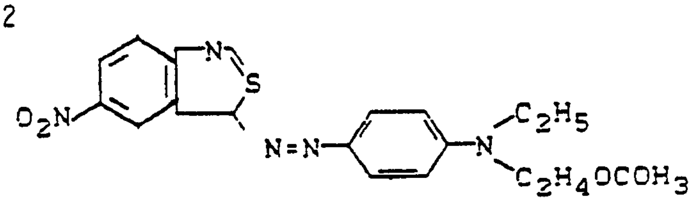

ø = Phenyl

Nr. 23

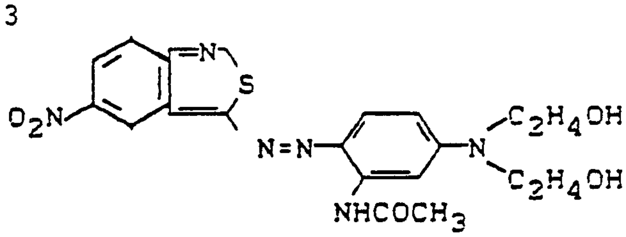

Nr. 24

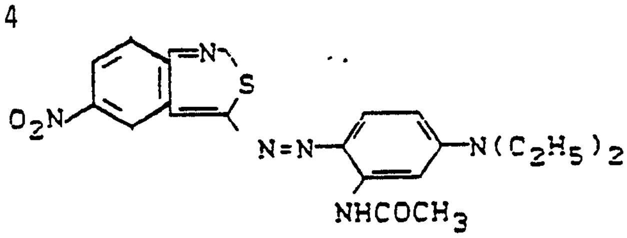

Nr. 25

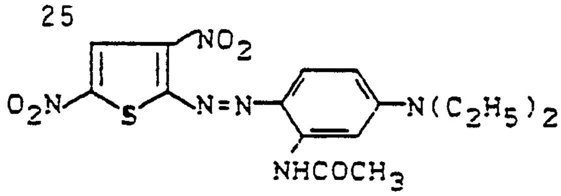

Nr. 26

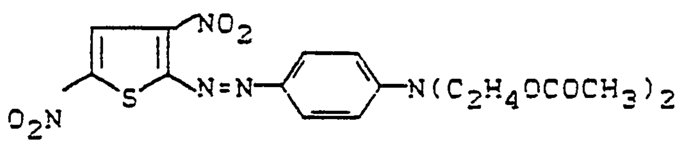

Nr. 27

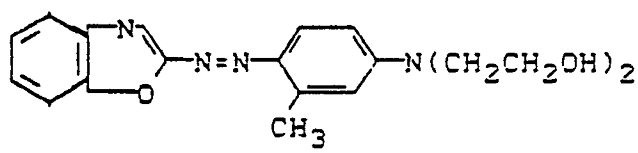

Nr. 28

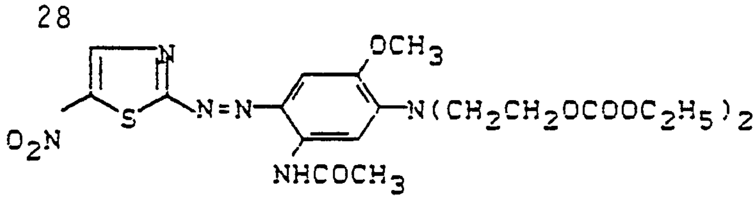

**Färbebeispiel**

20 g Perlon porös (Polyamid 6-Gewebe) werden bei einem Flottenverhältnis von 1 : 10 mit 1 g N,N-Diacetoxyethyl-3-acetylamino-6-ethoxy-anilin zwischen 80 und 100°C während 1 Stunde fixiert (Aufziehgrad ca. 20 %).

Nach Spülung mit reichlich kaltem Wasser wird ein frisches Bad angesetzt, bestehend aus 0,5 g Eisessig, 0,5 g Natriumacetat, 200 ml Wasser, 0,2 g Dinitrophenylhydrazin und 0,1 g Kaliumjodid, und dann wird es wieder erhitzt unter laufender Flottenzirkulation (Gerät: Praxitest, Firma Original Hanau).

Zwischen 80 - 100°C werden während 1 Stunde 0,4 ml 30 %-iges Wasserstoffperoxid zugesetzt. Es wird noch 1 Stunde bei 100°C gehalten. Nach Spülen und Trocknen erhält man eine blaue Färbung auf Polyamid. Arbeitet man ohne KJ-Zusatz, so erhält man nur eine schwache gelbliche Färbung.

**Beispiel für Analysenverfahren**

Auf Glasplatten, die mit porösem Kieselgel beschichtet sind (Fa. Merck) werden verschiedene CH-acide Verbindungen, gelöst in Dimethylformamid aufgetragen.

Man läßt in einer Mischung von z. B. Toluol, Dioxan, Eisessig entwickeln und besprüht die Platte anschließend mit einer warmen butanolischen Lösung eines aromatischen Hydrazins (Dinitrophenylhydrazin).

Anschließend besprüht man mit einer wässrigen Kaliumjodidlösung, die einen geeigneten Puffer enthält, und danach mit einer wässrigen Wasserstoffperoxidlösung. Nach einiger Zeit entstehen da, wo sich

Kupplungskomponenten befinden, tiefere Färbungen. Die Farbstoffbildung kann auch statt durch Sprüh-Technik durch eine normale Bad-Entwicklung z. B. mit einer wässrigen Lösung aus KJ und $H_2O_2$ oder $KJO_3$ durchgeführt werden.

## Patentansprüche

1. Verfahren zur Herstellung von Azoverbindungen durch oxidative Kupplung von aromatischen oder heteroaromatischen Hydrazinen bzw. Hydraziniumverbindungen mit aromatischen Aminen, Phenolen oder CH-aciden Verbindungen, dadurch gekennzeichnet, daß man die Oxidation in Gegenwart von Redoxvermittlern ("Mediatoren") mit einem Standardpotential von 0,2 - 1,5 Volt und gegebenenfalls eines zusätzlichen Oxidationsmittels mit einem Standardpotential von 0,25 - 2,5 Volt durchführt, wobei die Summe der Oxidationsäquivalente mindestens 4 betragen soll und die Redoxvermittler Elemente enthalten, die stabile und isolierbare Verbindungen in mindestens 3 verschiedenen Oxidationszahlen bilden und in mindestens 4 Redoxpaaren mit jeweils unterschiedlichen Standardpotentialen wirken können.

2. Verfahren nach Anspruch 1 dadurch gekennzeichnet, daß die Standardpotentiale der Redoxvermittler 0,4 bis 1,3 Volt betragen, insbesondere
0,54; 0,99; 1,09; 1,19;
1,21; 0,59; 0,60.

3. Verfahren nach Anspruch 1 oder 2, dadurch gekennzeichnet, daß die Potentiale elektrochemisch eingestellt werden.

4. Verfahren nach Anspruch 1, dadurch gekennzeichnet, daß als Redoxvermittler elementares Jod oder jodfreisetzende Verbindungen verwendet werden.

5. Verfahren nach Anspruch 1 oder 4, dadurch gekennzeichnet, daß als jodfreisetzender Redoxvermittler NaJ, KJ, $NaJO_3$ oder $KJO_3$ verwendet wird.

6. Verfahren nach Anspruch 1, dadurch gekennzeichnet, daß als Redoxvermittler elementares Jod verwendet wird.

7. Verfahren nach Anspruch 1, dadurch gekennzeichnet, daß 0,1 - 50 Mol-% Redoxvermittler pro Mol Hydrazin eingesetzt werden.

8. Verfahren nach Anspruch 1, dadurch gekennzeichnet, daß als Hydrazinverbindungen solche der Benzthiazolreihe eingesetzt werden.

9. Verfahren nach Anspruch 1, dadurch gekennzeichnet, daß man als Kupplungskomponente Amine der Formel

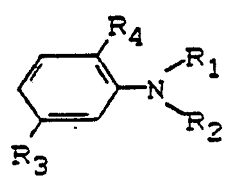

worin

| | |
|---|---|
| $R_1$ und $R_2$ | H oder gegebenenfalls substituiertes Alkyl oder Aralkyl, |
| $R_3$ | H, gegebenenfalls substituiertes Alkyl oder Aralkyl, NH-Acyl, -O-Alkyl, -O-Aryl, $-(OCH_2CH_2)_m$-OH, -OCO-Alkyl, -OCO-O-Alkyl, -NR'R'' (R',R'' = H, Alkyl; m = 1 - 100) oder NH-$SO_2$-Alkyl |
| $R_4$ | H, Alkyl, F, Cl, Br, O-Alkyl oder O-Aryl bedeuten, einsetzt. |

## Claims

1. Process for the preparation of azo compounds by oxidative coupling of aromatic or heteroaromatic hydrazines or hydrazinium compounds with aromatic amines, phenols or CH-acidic compounds, characterized in that the oxidation is carried out in the presence of redox mediators having a standard potential of 0.2 - 1.5 volts, and optionally in the presence of an additional oxidant having a standard potential of 0.25 - 2.5 volts, where the sum of the oxidation equivalents should be at least 4, and where the redox mediators contain elements which form stable and isolable compounds in at least 3 different oxidation states and are able to act in at least 4 redox pairs with different standard potentials in each case.

2. Process according to Claim 1, characterized in that the standard potentials of the redox mediators are 0.4 to 1.3 volts, in particular 0.54; 0.99; 1.09; 1.19; 1.21; 0.59; and 0.60.

3. Process according to Claim 1 or 2, characterized in that the potentials are established electrochemically.

4. Process according to Claim 1, characterized in that the redox mediators used are elemental iodine or iodine-liberating compounds.

5. Process according to Claim 1 or 4, characterized in that the iodine-liberating redox mediators used are NaI, KI, $NaIO_3$ or $KIO_3$.

6. Process according to Claim 1, characterized in that the redox mediator used is elemental iodine.

7. Process according to Claim 1, characterized in that 0.1 - 50 mol-% of redox mediator are employed per mole of hydrazine.

8. Process according to Claim 1, characterized in that the hydrazine compounds employed are those of the benzothiazole series.

9. Process according to Claim 1, characterized in that the coupling component employed is amines of the formula

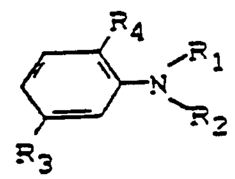

in which

$R_1$ and $R^2$ denote H or optionally substituted alkyl or aralkyl,

$R_3$ denotes H, optionally substituted alkyl or aralkyl, NH-acyl, -O-alkyl, -O-aryl, $-(OCH_2CH_2)_m-OH$, -OCO-alkyl, -OCO-O-alkyl, -NR'R''(R' and R'' = H or alkyl; m = 1 - 100) or $NH-SO_2$-alkyl, and

$R_4$ denotes H, alkyl, F, Cl, Br, O-alkyl or O-aryl.

**Revendications**

1. Procédé pour préparer des colorants azoïques par copulation oxydante d'hydrazines aromatiques ou hétéro-aromatiques ou de composés d'hydrazinium avec des amines aromatiques, des phénols ou des composés contenant un groupe CH acide, procédé caractérisé en ce qu'on conduit l'oxydation en présence d'agents du type redox ("médiateurs") présentant un potentiel normal, ou potentiel standard, de 0,2 à 1,5 V, et éventuellement en présence d'un oxydant supplémentaire présentant un potentiel normal de 0,25 à 2,5 V, la somme des équivalents d'oxydation devant représenter au moins 4 et l'agent de type redox devant contenir des éléments formant des composés stables et isolables en au moins 3 degrés d'oxydation, et pouvant agir en au moins 4 paires d'agents redox ayant chacun des potentiels normaux différents.

2. Procédé selon la revendication 1, caractérisé en ce que les potentiels normaux de l'agent de type redox valent de 0,4 à 1,3 V, en particulier 0,54; 0,99; 1,09; 1,19; 1,21; 0,59; 0,60 V.

3. Procédé selon la revendication 1 ou 2, caractérisé en ce qu'on ajuste les potentiels par voie électrochimique.

4. Procédé selon la revendication 1, caractérisé en ce qu'on utilise, comme agents de type redox, de l'iode élémentaire ou des composés libérant de l'iode.

5. Procédé selon la revendication 1 ou 4, caractérisé en ce qu'on utilise, comme agents de type redox libérant de l'iode, NaI, KI, $NaIO_3$ ou $KIO_3$.

6. Procédé selon la revendication 1, caractérisé en ce qu'on utilise, comme agent de type redox, de l'iode élémentaire.

7. Procédé selon la revendication 1, caractérisé en ce qu'on utilise 0,1 à 50 mol-% de l'agent de type redox par mole d'hydrazine.

8. Procédé selon la revendication 1, caractérisé en ce qu'on utilise comme hydrazines celles de la série du benzothiazole.

9. Procédé selon la revendication 1, caractérisé en ce qu'on utilise comme copulant des amines de formule:

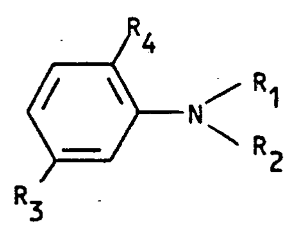

dans laquelle

$R_1$ et $R_2$ représentent chacun H ou un groupe alkyle ou aralkyle éventuellement substitués,

$R_3$ représente H, un groupe alkyle ou aralkyle éventuellement substitués, un groupe NH-acyle, -O-alkyle, -O-

aryle, $-(OCH_2CH_2)_m-OH$, -OCO-alkyle, -OCO-O-alkyle, -NR'R'' (R' et R'' représentant chacun H ou un groupe alkyle; m valent 1 à 100) ou un groupe $NH-SO_2$-alkyle;

$R_4$ représente H, un groupe alkyle, F, Cl, Br, un groupe O-alkyle ou O-aryle.